# EUROPÄISCHE PATENTANMELDUNG

(11) **EP 3 502 040 A1**
(43) Veröffentlichungstag der Anmeldung: **26.06.2019**
(21) Anmeldenummer: 18210608.8
(22) Anmeldetag: 06.12.2018
(51) Int. Cl.: B66F 9/075, B66F 9/22

(54) **FLURFÖRDERZEUG MIT BERÜHRUNGSSENSITIVER BEDIENUNGSEINRICHTUNG**

(30) Priorität: 19.12.2017 DE 102017130579
(71) Anmelder: STILL GmbH, 22113 Hamburg (DE)
(72) Erfinder: HOWEY, Ansgar, 22926 Ahrensburg (DE); BERTRAM, Sascha, 10961 Berlin (DE)
(74) Vertreter: Patentship Patentanwaltsgesellschaft mbH

(57) **Zusammenfassung**

Die Erfindung betrifft ein Flurförderzeug mit einer Hydraulikventile aufweisenden Arbeitshydraulik, insbesondere mit einem hydraulischen Hubantrieb eines Hubgerüstes und/oder einem hydraulischen Neigeantrieb eines Hubgerüstes und/oder einem hydraulischen Verstellantrieb eines Lastaufnahmemittels, insbesondere einer Lastgabel. Es wird vorgeschlagen, dass die Hydraulikventile der Arbeitshydraulik mit einer Bedienungseinrichtung (3) mit mindestens einer berührungssensitiven Sensorfläche (4) in Wirkverbindung stehen und mittels Berührung der Sensorfläche (4) steuerbar sind

## Beschreibung

Die Erfindung betrifft ein Flurförderzeug mit einer Hydraulikventile aufweisenden Arbeitshydraulik, insbesondere mit einem hydraulischen Hubantrieb eines Hubgerüstes und/oder einem hydraulischen Neigeantrieb eines Hubgerüstes und/oder einem hydraulischen Verstellantrieb eines am Hubgerüst anhebbar und absenkbar angeordneten Lastaufnahmemittels, insbesondere einer Lastgabel.

Bei Flurförderzeugen, insbesondere Gabelstaplern oder Schubmaststaplern, ist es bekannt, ein hydraulisches System zum Antrieb von Arbeitsgeräten einzusetzen. Das hydraulische System besteht aus einer bevorzugt im Fördervolumen steuerbaren bzw. regelbaren Hydraulikpumpe, die mit einem als Verbrennungs- oder Elektromotor ausgebildeten Primärantrieb verbunden ist und die eine Arbeitshydraulik mit Druckmittel versorgt.

Die Verbraucher der Arbeitshydraulik sind beispielsweise Lasthandhabungsvorrichtungen wie ein an einem Hubgerüst anhebbar und absenkbar angeordnetes Lastaufnahmemittel, beispielsweise eine Lastgabel, bei einem Flurförderzeug, beispielsweise ein Hubantrieb, ein Neigeantrieb und gegebenenfalls vorhandene Zusatzverbraucher, wie etwa eine Seitenschubvorrichtung des Lastaufnahmemittels.

Übliche Bedienelemente für die hydraulischen Funktionen der Arbeitshydraulik eines Flurförderzeuges sind Hebel für handbetätigte Ventile und ein- oder mehrachsige Joysticks oder Stellhebel bei elektrischen Proportionalventilen.

Die Anwendung von ein- oder mehrachsigen Joysticks bzw. Bedienhebeln hat aufgrund der beweglichen Teile Nachteile bezüglich der Dichtigkeit gegen umgebende Medien. Außerdem sind sie schwer zu reinigen. Bedingt durch die Mechanik sind auch die Beschaffungskosten relativ hoch. Die Flexibilität der Nutzung ist relativ eingeschränkt, weil jede Bewegungsachse nur eine konkrete Funktion bewirken kann. Für weitere Funktionen muss eine Umschalttaste betätigt werden.

Der vorliegenden Erfindung liegt die Aufgabe zugrunde, ein Flurförderzeug der eingangs genannten Art so auszugestalten, dass die Bedienung der Arbeitshydraulik erleichtert wird.

Diese Aufgabe wird erfindungsgemäß dadurch gelöst, dass die Hydraulikventile der Arbeitshydraulik mit einer Bedienungseinrichtung mit mindestens einer berührungssensitiven Sensorfläche in Wirkverbindung stehen und mittels Berührung der Sensorfläche steuerbar sind.

Für die Bedienung der Arbeitshydraulik des Flurförderzeuges wird also das an sich von so genannten Touchpads z.B. in der Unterhaltungselektronik oder bei Automobilanwendungen bekannte Prinzip berührungssensitiver Sensorflächen genutzt. Es kann sich dabei um eine einheitliche Sensorfläche oder auch mehrere geteilte Sensorflächen handeln. Die Sensorflächen können eben oder einfach gekrümmt oder dreidimensional gekrümmt sein.

Zweckmäßigerweise weist die berührungssensitive Sensorfläche eine kapazitive Sensorik auf. Auch der Einsatz einer druckempfindlichen Sensorik oder einer Sensorik, die beide Möglichkeiten kombiniert, ist denkbar. Außerdem kann die berührungssensitive Sensorfläche auch als transparente Folie ausgebildet sein.

Bevorzugt ist die Bedienungseinrichtung an einer Armlehne eines Fahrersitzes des Flurförderzeugs angeordnet, so dass sie in optimaler ergonomischer Position gut erreichbar ist.

Um eine versehentliche Bedienung zu verhindern, ist die berührungssensitive Sensorfläche vorteilhafterweise mit einer Funktionssperre ausgestattet.

Dabei weist die Funktionssperre vorzugsweise einen druckempfindlichen Sensor auf, der auf kurzzeitigen Druck, beispielsweise mit einem oder mehrerer Fingern des Fahrers des Flurförderzeugs, eine Entsperrung der berührungssensitiven Sensorfläche bewirkt. So kann auf einfache Weise durch kurzzeitige Erhöhung des Drucks eines oder mehrerer Finger des Fahrers des Flurförderzeugs die Bedienungseinrichtung entsperrt werden. Die Sensorfläche kann auch mit einem Mikroschalter ausgestattet sein, der auf eine Druckerhöhung durch kurzzeitiges Runterdrücken der gesamten Sensorfläche reagiert.

In einer alternativen Ausgestaltung der Erfindung ist die Bedienungseinrichtung dazu eingerichtet, dass die Entsperrung durch kurzes Antippen der gewünschten Sensorfläche mit direkt an derselben Stelle darauffolgender Berührung zur Bedienung der Sensorfläche erfolgt.

Die Entsperrung der Sensorfläche kann alternativ auch so ausgestaltet sein, dass durch eine spezifische Geste auf der Sensorfläche die Entsperrung bewirkt wird.

Eine weitere alternative Ausgestaltung der Erfindung sieht vor, dass die Funktionssperre ein separates Bedienelement, insbesondere eine Entsperrtaste, aufweist.

In einer bevorzugten Ausführungsform der Erfindung ist die Bedienungseinrichtung dazu eingerichtet, vordefinierte Berührungen der sensitiven Sensorfläche in Arbeitsanweisungen der Arbeitshydraulik umzusetzen. Dabei sind durch die Berührung einer Position auf der Sensorfläche innerhalb eines definierten Koordinatensystems Richtung und/oder Geschwindigkeit einer Bewegung der Arbeitshydraulik und/oder ein Anfahren einer Zielposition der Arbeitshydraulik steuerbar. Auf diese Weise kann z.B. eine bestimmte Hubhöhe oder Hubgerüstneigung mit einem einfachen Antippen einer bestimmten Position auf der Sensorfläche von der Arbeitshydraulik angefahren werden.

Eine andere vorteilhafte Ausgestaltung sieht vor, dass die Bedienungseinrichtung dazu eingerichtet ist, vordefinierte Bewegungen auf der sensitiven Sensorfläche in Arbeitsanweisungen der Arbeitshydraulik umzusetzen. Dabei sind durch eine schiebende Bewegung vom Punkt des Aufsetzens auf der Sensorfläche zu einer Position auf der Sensorfläche Richtung und/oder Geschwindigkeit einer Bewegung der Arbeitshydraulik steuerbar. Hierbei bestimmen insbesondere Länge und Richtung des Vektors während einer schiebenden Bewegung vom Punkt des Aufsetzens eines oder mehrerer Finger des Fahrers des Flurförderzeugs zu einer aktuellen Position auf der Sensorfläche die Geschwindigkeit und Richtung der Bewegung der Arbeitshydraulik.

Zweckmäßigerweise sind in der Bedienungseinrichtung eine Auswahl vordefinierter Dimensionen von Bewegungen auf der sensitiven Sensorfläche hinterlegt. Dabei umfasst die Auswahl mindestens eine der folgenden Dimensionen:
- Bewegungen in bestimmte Richtungen, insbesondere längs oder quer zur Armrichtung des Fahrers;
- Abstand von zwei oder mehr Berührpunkten und dessen Änderung;
- Drehende Bewegung von mehr als einem Berührpunkt;
- Bewegungen entlang eines der Ränder der Sensorfläche;
- Bewegungen auf einem bestimmten Bereich, der insbesondere haptisch abgetrennt ist.

Eine Bewegung auf der Sensorfläche, z.B. mittels eines oder mehrerer Finger, in eine der definierten Dimensionen bewirkt eine bestimmte Funktion der Arbeitshydraulik. Bei gleichzeitigen Bewegungen in zwei der vorgegebenen Dimensionen können auch mehrere Funktionen gleichzeitig bedient werden. Beispielsweise können schräge Bewegungen oder eine Bewegung von zwei Fingern, deren Abstand sich währenddessen vergrößert, durchgeführt werden, um bestimmte Funktionen der Arbeitshydraulik zu bewirken.

In einer Weiterbildung des Erfindungsgedankens kann die berührungssensitive Sensorfläche auch dazu eingerichtet sein, zusätzlich zu den Hydraulikfunktionen und somit der Arbeitshydraulik Funktionen des Fahrantriebs und/oder der Lenkung des Flurförderzeugs zu bedienen. Beispielsweise kann eine Vorwärtsfahrt zum Einführen einer Lastgabel in eine Palette oder eine Drehung des Fahrzeugs, um die Richtung der Lastgabel zu korrigieren, mittels der Sensorfläche gesteuert werden.

Zusätzlich oder alternativ zur Bedienung von einzelnen diskreten Funktionen der Arbeitshydraulik können Gesten oder Zeichen, die auf der Sensorfläche mit einem oder mehreren Fingern von dem Fahrer des Flurförderzeugs ausgeführt werden können, definiert werden. Hierfür ist die Bedienungseinrichtung in einer weiteren Ausgestaltung der Erfindung dazu eingerichtet, vordefinierte Gesten und/oder Zeichen, die auf der sensitiven Sensorfläche ausgeführt werden, in Arbeitsanweisungen der Arbeitshydraulik umzusetzen. Solche Gesten können beispielsweise kurze, schnelle Bewegungen in eine oder mehrere Richtungen, ggf. auch mehrfach hintereinander, ggf. mit mehreren Fingern, sein. Auch eine kurze Drehung mit mehreren Fingern oder ein ein- oder mehrmaliges Tippen auf die Sensorfläche oder auf bestimmte Stellen der Sensorfläche, ggf. mit mehreren Fingern, können als Gesten verarbeitet werden. Diese Gesten können vordefinierte komplexe Funktionen auslösen, die mehrere Bewegungsschritte der Arbeitshydraulik und ggf. des Fahrantriebs sowie der Lenkung des Flurförderzeugs zusammenfassen.

Die berührungssensitive Sensorfläche kann zusätzlich zu den bereits beschriebenen Funktionen der Arbeitshydraulik auch für die Regelung der Fahrzeugführung verwendet werden. Beispielsweise können durch Bewegen des Fingers auf der Sensorfläche Lenkung, Fahrantrieb und Bremse des Fahrzeuges betätigt werden. Mit definierten Gesten können bestimmte Fahrzeugmanöver ausgelöst werden (z.B. Abbiegen, Anhalten, Weiterfahren, Auslagern eines Gegenstandes an einem Regal).

In einer anderen Weiterbildung der Erfindung ist die berührungssensitive Sensorfläche zusätzlich dazu ausgebildet, ein individuelles Merkmal der benutzenden Person (z.B. einen Fingerabdruck) zu sensieren und dieses als Zugangskontrolle für das Fahrzeug zu verwenden.

Mit der Erfindung ergeben sich eine Reihe von Vorteilen:
Eine berührungssensitive Sensorfläche lässt sich sehr günstig herstellen und sehr gut in z.B. mittels Spritzgussverfahren hergestellte Bauteile integrieren. Dabei sind vielfältige Formen leicht darstellbar, so dass sich Stylingwünsche gut umsetzen lassen. Die Bauteile sind leicht gegen Spritzwasser oder viele andere Medien zu schützen und leicht zu reinigen.

Weitere Vorteile und Einzelheiten der Erfindung werden anhand der in den schematischen Figuren dargestellten Ausführungsbeispiele näher erläutert. Hierbei zeigt
- Figur 1: ein Flurförderzeug in einer Seitenansicht,
- Figur 2: eine perspektivische Darstellung des Fahrersitzes mit einer erfindungsgemäßen Bedienungseinrichtung,
- Figur 3: eine Detailansicht der Bedienungseinrichtung,
- Figur 4: eine Ansicht einer ersten Funktionsweise der Bedienungseinrichtung,
- Figur 5: eine Ansicht einer zweiten Funktionsweise der Bedienungseinrichtung und
- Figur 6: eine Ansicht einer dritten Funktionsweise der Bedienungseinrichtung.

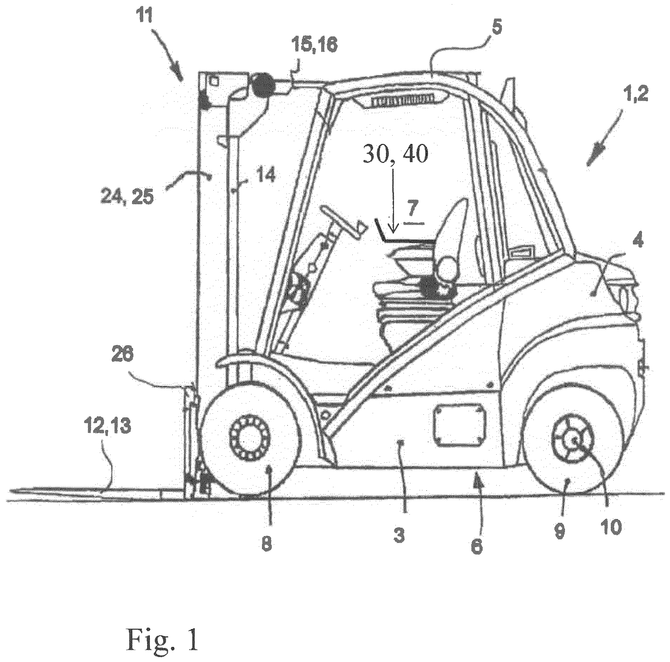

Die Figur 1 zeigt ein Flurförderzeug 2, im vorliegenden Beispiel einen Gegengewichtsgabelstapler 1, in einer Seitenansicht. Das Flurförderzeug 2 umfasst in einem mittleren Abschnitt eines von einem Rahmen 3, einem Gegengewicht 4 und einem Fahrerschutzdach 5 gebildeten Fahrzeugaufbau 6 und innerhalb des Fahrerschutzdaches 5 einen Fahrerarbeitsplatz 7. Unterhalb des Fahrerarbeitsplatzes 7 ist ein Aggregateraum ausgebildet, in dem sich die Komponenten des Antriebssystems des Flurförderzeugs 2 befinden. Bei einem verbrennungs-motorischen Antriebssystem können unterhalb des Fahrerarbeitsplatzes 7 ein Verbrennungsmotor und die von dem Verbrennungsmotor angetriebenen Komponenten eines Fahrantriebs und einer Arbeitshydraulik angeordnet sein. Bei einem batterie-elektrischen Antriebssystem ist unterhalb des Fahrerarbeitsplatzes 7 ein Batteriefach zur Aufnahme einer beispielsweise als Batterieblock ausgebildeten Energieversorgungseinrichtung ausgebildet, mit der der Fahrantrieb und die Arbeitshydraulik mit elektrischer Energie versorgt werden. In der Figur sind weiterhin im vorderen Bereich des Flurförderzeugs 2 Räder dargestellt, die als Antriebsräder 8 ausgebildet sind, und im heckseitigen Bereich eine mit gelenkten Rädern 9 versehene Lenkachse 10. An der Vorderseite des Flurförderzeugs 2 ist ein Hubgerüst 11 angeordnet, an dem ein als Lastgabel 12 ausgebildetes Lastaufnahmemittel 13 anhebbar und absenkbar geführt ist. Das Hubgerüst 11 umfasst einen Standmast 14, der von zwei seitlich, in Fahrzeugquerrichtung beabstandet angeordneten vertikalen Hubgerüstprofilen gebildet ist. Der Standmast 14 ist mittels eines Neigeantriebs 15, der von Neigezylindern 16 gebildet ist, in der Neigung verstellbar am Fahrzeugaufbau 6 angeordnet. Das Hubgerüst 11 ist als Mehrfach-Hubgerüst ausgebildet, das ein oder mehrere in dem Standmast 14 geführte und nach oben ausfahrbare Ausfahrmaste 24, 25 aufweist, in denen das Lastaufnahmemittel 13 an einem Hubschlitten 26 höhenverstellbar geführt ist. Das Hubgerüst 11 ist in Fahrzeugquerrichtung zwischen den Antriebsrädern 8 angeordnet.

Ein Hubantrieb zum Anheben der Ausfahrmaste 24, 25 und zum Anheben des Lastaufnahmemittels 13 des Hubgerüstes 11 und der Neigeantrieb 15 bilden Verbraucher der Arbeitshydraulik des Flurförderzeugs 2. Ein weiterer Verbraucher der Arbeitshydraulik kann von einem Verstellantrieb des Lastaufnahmemittels 13 gebildet sein, beispielsweise einer Seitenschubvorrichtung.

Die Arbeitshydraulik wird von einer Hydraulikpumpe, die vom Verbrennungs- oder Elektromotor angetrieben wird, mit Druckmittel versorgt. Mittels Hydraulikventilen werden die Verbraucher der Arbeitshydraulik gesteuert. Zur Bedienung der Arbeitshydraulik, insbesondere der Hydraulikventile der Arbeitshydraulik, ist eine Bedienungseinrichtung 30 im Bereich des Fahrerarbeitsplatzes 7 vorgesehen. Die Bedienungseinrichtung 30 weist eine berührungssensitive Sensorfläche 40 auf.

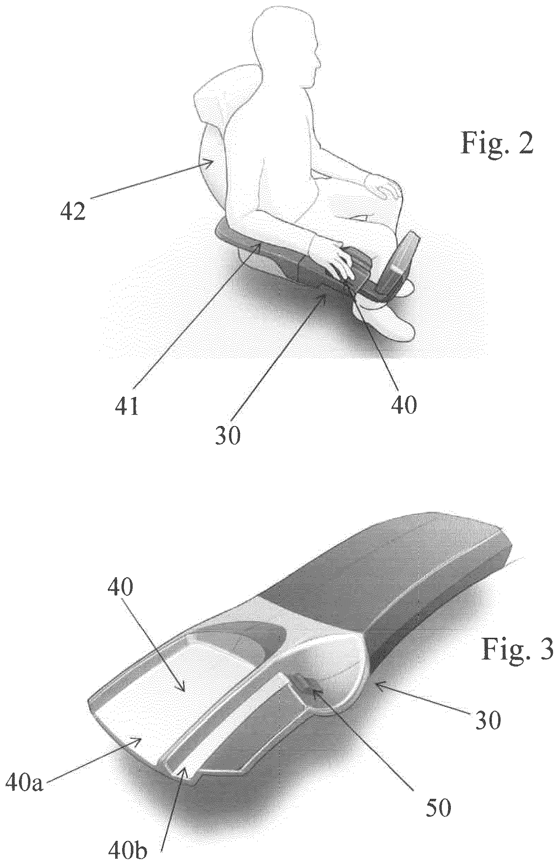

In der Figur 2 ist ein Fahrersitz 42 des Flurförderzeugs 2 mit einer Armlehne 41 dargestellt. Am vorderen Ende der Armlehne 41 ist die Bedienungseinrichtung 30 mit der berührungssensitiven Sensorfläche 40 angeordnet. Die Sensorfläche 40 ist so positioniert, dass sie in optimaler ergonomischer Position gut erreichbar ist. Durch Berührung der Sensorfläche 40 kann die Arbeitshydraulik des Flurförderzeugs 2 bequem und ergonomisch gesteuert werden.

Die Figur 3 zeigt die Bedienungseinrichtung 30 aus Figur 2 im Detail. Die Sensorfläche 40 ist in zwei Abschnitte 40a und 40b aufgeteilt, die haptisch voneinander getrennt sind. Außerdem ist eine separate Entsperrtaste 50 vorgesehen, über die die Funktionssperre der Sensorfläche 40 aufgehoben werden kann.

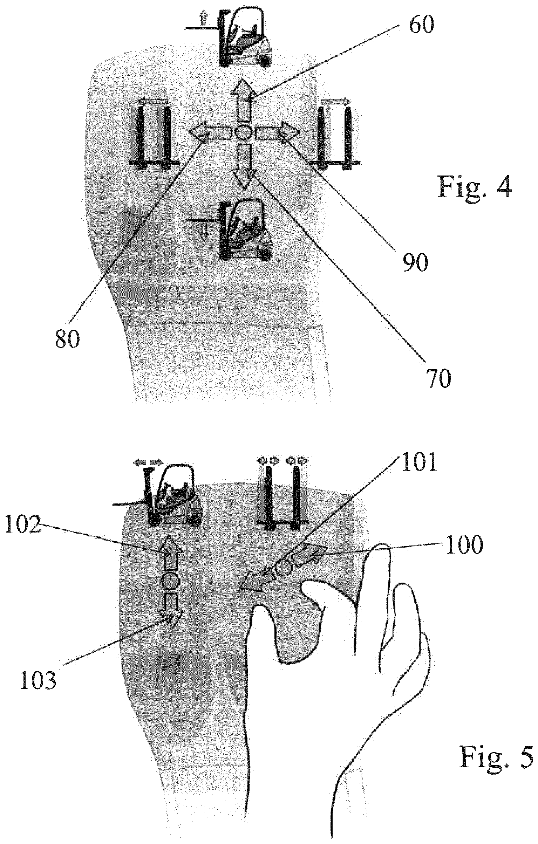

In der Figur 4 sind die Hauptfunktionen der Sensorfläche 40 dargestellt. Durch Bewegungen eines Fingers auf der Sensorfläche 40 nach oben 60 und unten 70 kann die Hubhöhe des Lastaufnahmemittels 13 des Flurförderzeugs 2 mittels des Hubantriebs eingestellt werden. Durch seitliche Bewegungen nach links 80 und rechts 90 kann das Lastaufnahmemittel 13 mittels der Seitenschubvorrichtung seitlich nach links und rechts verschoben werden.

Die Figur 5 zeigt weitere Funktionen der Sensorfläche 40. Durch Spreizen zweier Finger in seitlicher Richtung 100, 101 kann der Gabelabstand der Gabelzinken der Lastgabel 12 eingestellt werden. Eine Bewegung der Finger in Längsrichtung 102, 103 bewirkt eine Neigung des Hubgerüstes 11 mittels des Neigeantriebs.

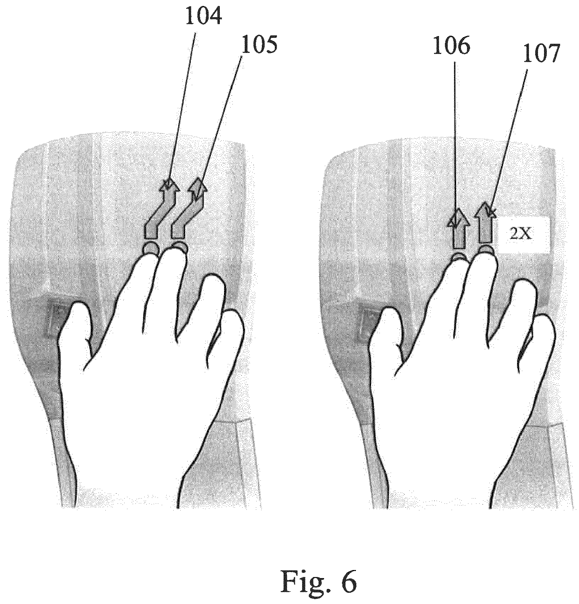

Schließlich ist in der Figur 6 noch eine Gestensteuerung der Sensorfläche 40 dargestellt. Wie in der linken Abbildung der Figur 6 gezeigt, können durch überlagerte Gesten 104, 105 kombinierte Operationen durchgeführt werden. In der rechten Abbildung der Figur 6 ist dargestellt, wie durch zweifaches Berühren 106, 107 und gleichzeitiges Bewegen der Finger komplexe halbautomatische Funktionen durchgeführt werden können.

## Patentansprüche

1. Flurförderzeug mit einer Hydraulikventile aufweisenden Arbeitshydraulik, insbesondere mit einem hydraulischen Hubantrieb eines Hubgerüstes und/oder einem hydraulischen Neigeantrieb eines Hubgerüstes und/oder einem hydraulischen Verstellantrieb eines Lastaufnahmemittels, insbesondere einer Lastgabel, **dadurch gekennzeichnet, dass** die Hydraulikventile der Arbeitshydraulik mit einer Bedienungseinrichtung (30) mit mindestens einer berührungssensitiven Sensorfläche (40) in Wirkverbindung stehen und mittels Berührung der Sensorfläche (40) steuerbar sind.

2. Flurförderzeug nach Anspruch 1, **dadurch gekennzeichnet, dass** die berührungssensitive Sensorfläche (40) eine kapazitive Sensorik aufweist.

3. Flurförderzeug nach Anspruch 1 oder 2, **dadurch gekennzeichnet, dass** die Bedienungseinrichtung (30) an einer Armlehne (41) eines Fahrersitzes (42) des Flurförderzeugs angeordnet ist.

4. Flurförderzeug nach einem der Ansprüche 1 bis 3, **dadurch gekennzeichnet, dass** die berührungssensitive Sensorfläche (40) mit einer Funktionssperre ausgestattet ist.

5. Flurförderzeug nach Anspruch 4, **dadurch gekennzeichnet, dass** die Funktionssperre einen druckempfindlichen Sensor aufweist, der auf kurzzeitigen Druck eine Entsperrung der berührungssensitiven Sensorfläche (40) bewirkt.

6. Flurförderzeug nach Anspruch 4, **dadurch gekennzeichnet, dass** die Funktionssperre ein separates Bedienelement, insbesondere eine Entsperrtaste, aufweist.

7. Flurförderzeug nach einem der Ansprüche 1 bis 6, **dadurch gekennzeichnet, dass** die Bedienungseinrichtung (30) dazu eingerichtet ist, vordefinierte Berührungen der sensitiven Sensorfläche (40) in Arbeitsanweisungen der Arbeitshydraulik umzusetzen, wobei durch die Berührung einer Position auf der Sensorfläche innerhalb eines definierten Koordinatensystems Richtung und/oder Geschwindigkeit einer Bewegung der Arbeitshydraulik und/oder ein Anfahren einer Zielposition der Arbeitshydraulik steuerbar sind.

8. Flurförderzeug nach einem der Ansprüche 1 bis 7, **dadurch gekennzeichnet, dass** die Bedienungseinrichtung (30) dazu eingerichtet ist, vordefinierte Bewegungen auf der sensitiven Sensorfläche (40) in Arbeitsanweisungen der Arbeitshydraulik umzusetzen, wobei durch eine schiebende Bewegung vom Punkt des Aufsetzens auf der Sensorfläche (40) zu einer Position auf der Sensorfläche Richtung und/oder Geschwindigkeit einer Bewegung der Arbeitshydraulik steuerbar sind.

9. Flurförderzeug nach Anspruch 8, **dadurch gekennzeichnet, dass** in der Bedienungseinrichtung eine Auswahl vordefinierter Dimensionen von Bewegungen auf der sensitiven Sensorfläche (40) hinterlegt sind, wobei die Auswahl mindestens eine der folgenden Dimensionen umfasst:
• Bewegungen in bestimmte Richtungen, insbesondere längs oder quer zur Armrichtung des Fahrers
• Abstand von zwei oder mehr Berührpunkten und dessen Änderung
• Drehende Bewegung von mehr als einem Berührpunkt
• Bewegungen entlang eines der Ränder der Sensorfläche (40)
• Bewegungen auf einem bestimmten Bereich, der insbesondere haptisch abgetrennt ist

10. Flurförderzeug nach einem der Ansprüche 1 bis 9, **dadurch gekennzeichnet, dass** die Bedienungseinrichtung (30) dazu eingerichtet ist, vordefinierte Gesten und/oder Zeichen, die auf der sensitiven Sensorfläche (40) ausgeführt werden, in Arbeitsanweisungen der Arbeitshydraulik umzusetzen.
